Europäisches Patentamt

European Patent Office

Office européen des brevets

(11) Veröffentlichungsnummer: **0 220 360 B1**

(12) **EUROPÄISCHE PATENTSCHRIFT**

(45) Veröffentlichungstag der Patentschrift: **21.04.93**

(21) Anmeldenummer: **86103066.6**

(22) Anmeldetag: **07.03.86**

(51) Int. Cl.⁵: **G01S 13/26**

(54) **Expandersystem für Pulssignale.**

(30) Priorität: **23.10.85 CH 4566/85**

(43) Veröffentlichungstag der Anmeldung:
**06.05.87 Patentblatt 87/19**

(45) Bekanntmachung des Hinweises auf die
Patenterteilung:
**21.04.93 Patentblatt 93/16**

(84) Benannte Vertragsstaaten:
**CH DE FR GB IT LI NL SE**

(56) Entgegenhaltungen:
**DE-B- 1 265 242**
**US-A- 2 820 949**
**US-A- 3 943 467**

**NATIONAL TELECOMMUNICATIONS, Houston, Texas, 30. November - 4. Dezember 1980, Seiten 22.1.1-22.1.6, IEEE, New York, US; W.R. SMITH: "Saw filters for CPSM spread spectrum communication"**

(73) Patentinhaber: **SIEMENS-ALBIS AKTIENGE-SELLSCHAFT**
**PV/Patente und Verträge Postfach**
**CH-8047 Zürich(CH)**

(72) Erfinder: **Lauper, Alfred**
**Chileweg 31**
**CH-8912 Obfelden(CH)**
Erfinder: **Steffen, Andreas**
**Rohrstrasse 27**
**CH-8952 Schlieren(CH)**

NATIONAL TELECOMMUNICATIONS CONFE-
RENCE NTC - 1981, New Orleans, Louisiana,
29. November - 3. Dezember 1981, Seiten
D9.3.1-D9.3.6, IEEE, New York, US; S.L. RO-
NALD et al.: "Computer simulation of a frequency hop system and a direct sequencefrequency hop hybrid system in a collocated
environment"

IEEE, TRANSACTIONS ON MICROWAVE
THEORY AND TECHNIOUES, Band MTT-22,
Nr. 12, Dezember 1974, Seiten 1308-1312,
New York, US; D.W. MELLON et al.:
"Development of a pulse compression distance measuring equipment system using
surface acoustic wave devices"

AEG-TELEFUNKEN, Band 54, Nr. 1-2, 1981,
Seiten 64-78, Wiss. Ber. AEG-Telefunken,
Frankfurt am Main, DE; P. SCHMITT:
"Frequenzdispersive SAW-Filter für die
Radar-Pulskompression"

PROCEEDINGS OF THE IEEE, Band 52, Nr. 4,
April 1964, Seiten 377-389, IEEE, New York,
US; C.E. COOK et al.: "A pulse compression
predistortion function for efficient sidelobe
reduction in a high-power radar"

ULABY et al.,"Microwave Remote Sensing",
vol II, 1982, Addison-Wesley Publishing
Company, Reading, Massachusetts, US; Seiten 525-526

Peter SCHMITT, "Impulskompression mit
akustischen Oberflächenwellen", NACH-
RICHTEN ELEKTRONK 7, 1979

**Beschreibung**

Die vorliegende Erfindung betrifft ein Expandersystem für Pulssignale nach dem Oberbegriff des Patentanspruches 1.

In Expandersystemen, wie sie in der Radar- und Ortungstechnik eingesetzt werden, wirkt sich die Signalexpansion ungünstig im Hinblick auf die Leistung des Ausgangssignals aus. Die bekannten Expandersysteme, wie sie z.B. aus der Druckschrift "Frequenzdispersive SAW-Filter für die Radar-Pulskompression", AEG Telefunken, Band 54, Nr 1-2, 1981, Seiten 64-78, Wiss. Ber., bekannt sind, werden daher den Anforderungen, die sich bei einer relativ grossen Expansion stellen, nicht gerecht. Die Erfindung zeigt demgegenüber einen Weg, um zu einem Expandersystem für Pulssignale mit einer relativ grossen Leistung zu gelangen.

Diese Aufgabe wird erfindungsgemäss mit einem Expandersystem für Pulssignale gelöst, dessen Merkmale aus dem kennzeichnenden Teil des Patentanspruches 1 hervorgehen. Vorteilhafte Ausgestaltungen der Erfindung ergeben sich aus den weiteren Ansprüchen. Die Erfindung wird nachfolgend durch Beschreibung von Ausführungsbeispielen anhand einer Zeichnung näher erläutert. Es zeigt:

Fig. 1      das Blockschaltbild eines Expandersystems nach der Erfindung

Fig. 2      das Zeitdiagramm verschiedener Signale nach einer ersten Ausführung der Erfindung

Fig. 3      das Zeitdiagramm verschiedener Signale nach einer zweiten Ausführung der Erfindung

Fig. 4      die spektrale Darstellung des anregenden Signals nach der Erfindung und nach dem Stand der Technik

Fig. 5      das Blockschaltbild eines Phasenmodulators zu einem Expandersystem nach der Erfindung

Fig. 6      das Schaltbild einer Begrenzerschaltung zu einem erfindungsgemässen Expandersystem.

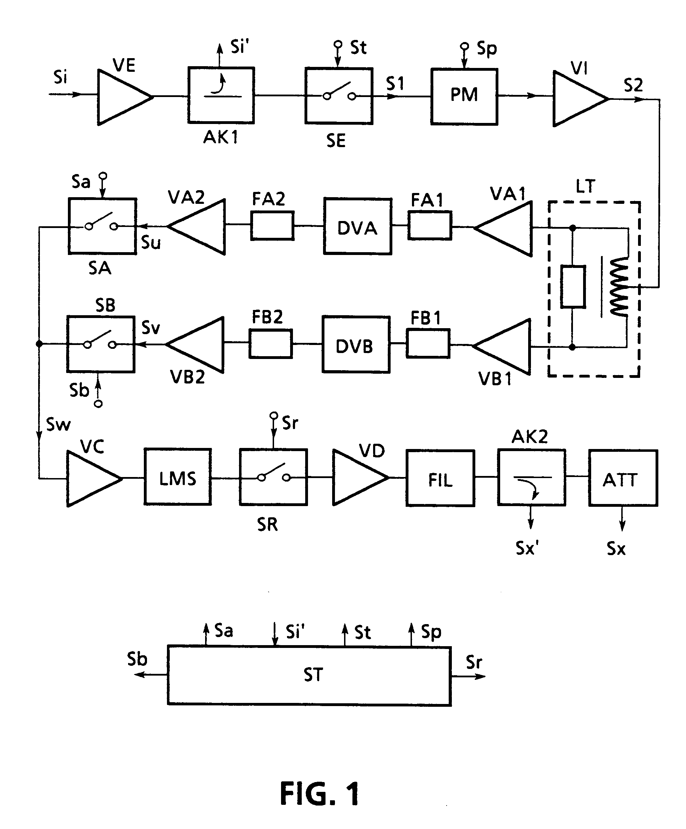

Das Expandersystem nach Fig. 1 weist einen Eingangsverstärker VE auf, dessen Ausgangssignal über die Reihenschaltung eines Auskopplers AK1, eines Schalters SE und eines 180° - Phasenmodulators PM dem Eingang eines Trennverstärkers VI zugeführt wird, der an einen Leistungsteiler LT angeschlossen ist, der das Ausgangssignal S2 des Verstärkers VI auf zwei getrennte Expanderkanäle verteilt. Ein solcher Expanderkanal kann beispielsweise aus der Reihenschaltung eines Verstärkers VA1, eines Filters FA1, eines SAW-Filters DVA, eines weiteren Filters FA2, eines weiteren Verstärkers VA2 und eines Schalters SA bestehen.

Das Expandersystem kann auch mit einem einzigen Expanderkanal arbeiten, wobei dann die entsprechenden Elemente des zweiten Expanderkanals in Fig. 1, das heisst die Elemente VB1, FB1, DVB, FB2, VB2 und SB2 sowie der Leistungsteiler LT und gegebenenfalls der Schalter SA entfallen.

Die Schalter SA und SB sind ausgangsseitig mit dem Eingang eines weiteren Verstärkers VC verbunden, dessen Ausgangssignal über die Reihenschaltung einer Begrenzerschaltung LMS, eines weiteren Schalters SR, eines Verstärkers VD, eines Filters FIL und eines zweiten Auskopplers AK2 dem Eingang eines Dämpfungsgliedes ATT zugeführt wird, das das expandierte Nutzsignal Sx liefert.

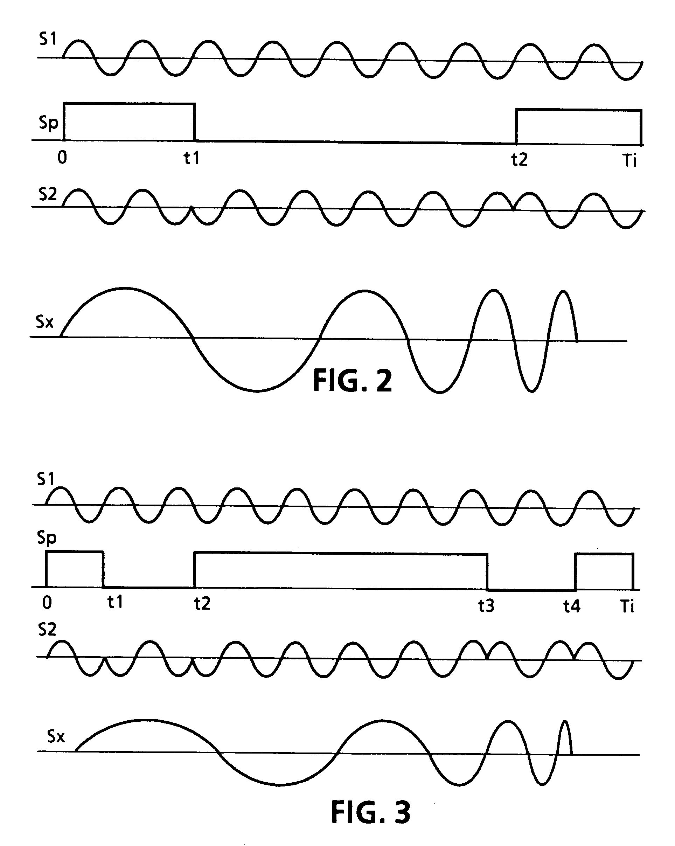

Das Expandersystem nach Fig. 1 funktioniert folgendermassen:
Das Eingangssignal Si des Verstärkers VE wird von einem Oszillator, beispielsweise von einem Kohärenz-Ozillator (COHO) geliefert. Ein Teil Si' des verstärkten Signals Si wird durch den Auskoppler AK1 abgezweigt und dem Eingang einer Steuerschaltung ST zugeführt, die die Steuersignale St, Sa, Sb und Sr für die Schalter SE, SA, SB bzw. SR sowie ein Steuersignal Sp für den Phasenmodulator PM abgibt, an dessen Eingang Abschnitte S1 (Fig. 2 und 3) einer bestimmten Dauer Ti eines Signals vorliegen, das relativ viele Perioden des verstärkten Signals Si umfasst.

Am Steuereingang des Phasenmodulators PM erscheint gelegentlich ein Signal Sp der Dauer Ti (Fig. 2 und 3). Das Signal Sp nach Fig. 2 ist nur zwischen den Zeitpunkten t1 und t2 aktiv, für die die Beziehung (t2 - t1)/Ti = g kleiner als 1 gilt und in denen je eine 180° - Phasendrehung des Signals S2 stattfindet. Das Signal Sp nach Fig. 3 ist nur zwischen den Zeitpunkten t1 und t2 und t3 und t4 aktiv, für die die Beziehungen (t4 - t1)/Ti = p kleiner als 1 und (t3 - t2)/Ti = q kleiner als p gelten und bei denen je eine 180° - Phasendrehung des Signals S2 stattfindet. Dabei ist es in beiden Fällen von Vorteil, wenn die Phasenumkehr bei den Nulldurchgängen geschieht. Von den Verstärkern V1, VA1, VB1 und den Filtern FA1, FB1, die lediglich zur Verbesserung der Signaleigenschaften dienen, können gegebenenfalls einige oder alle entfallen, da die eigentliche Expandierung der Signale S2 gegebenenfalls nach ihrer Verstärkung und Filterung in den SAW-Filtern DVA und/oder DVB geschieht. Das expandierte Signal hat eine Gesamtdauer Te viel grösser als Ti und ist daher auch äusserst schwach, so dass eine nachträgliche Verstärkung beispielsweise durch die Verstärker VA2, VB2 und/oder VC notwendig ist. Die Filter FA2 und FB2 sind zur Dämpfung von unerwünschten Frequenzen vorgesehen. Im weiteren ist die Amplitude der einzelnen expandierten Schwingungen in der Regel nicht konstant; um diesem Effekt entgegenzuwirken ist die fakultative Begrenzerschaltung LMS nachgeschaltet.

Das expandierte Signal weist zudem Vor- und Nachläufer auf, die durch den Schalter SA abgetrennt werden können, so dass nach Durchlaufen des Verstärkers VD und des Filters FIL ein relativ sauberes und grosses expandiertes Signal Sx der Dauer Te am Ausgang des Dämpfungsgliedes ATT gewonnen werden kann. Das vom Auskoppler AK2 abgezweigte Signal Sx' kann zu Kontroll- bzw. Synchronisierungszwecken gebraucht werden. Mit den Schaltern SA und SB können zwei unterschied lich expandierte Signale selektiert werden.

Durch den erfindungsgemäss eingefügten 180° - Phasenmodulator PM, der die Phasensprünge in den Zeitpunkten t2, t1 bzw. t1, t2, t3 und t4 bewirkt, ergibt sich eine merkliche Verringerung der Abschwächung gegenüber einem Expandersystem ohne Modulator PM, weil damit eine relativ hohe Leistungsdichte im gewünschten Frequenzbereich erreicht wird, was viele Vorteile im Hinblick auf das Rausch/Signal-Verhältnis und auf den Verstärkungsfaktor der nachgeschalteten Verstärker mit sich bringt.

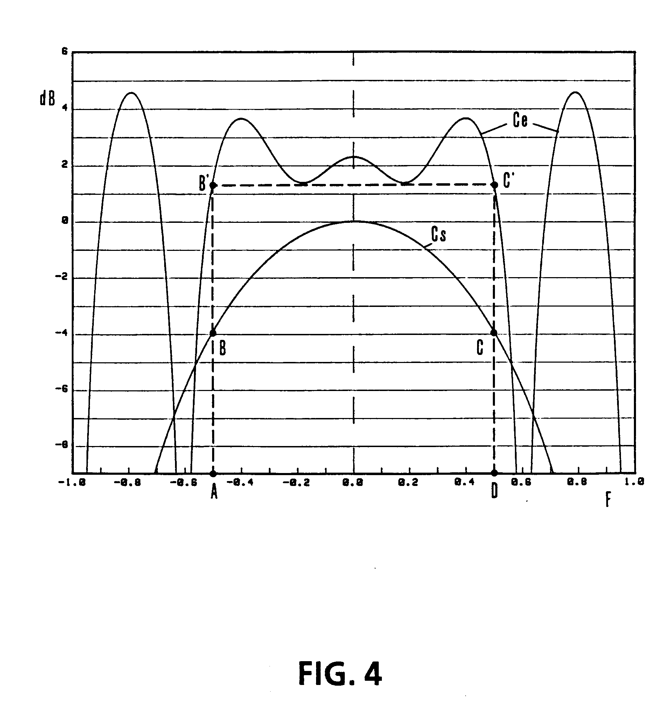

In Fig. 4 stellt die Kurve Cs die Dämpfung in dB eines Expandersystems ohne den Phasenmodulator PM und die Kurve Ce die Dämpfung eines solchen mit vier Phasenumschaltungen gemäss Fig. 3 in Funktion der normierten Frequenz F dar, für die die Beziehung $F = (f - fm)/B$ gilt, worin f die Nutzfrequenz, fm die Mittenfrequenz, B die Bandbreite und $B \cdot Ti = To = $ konstant ist.Vorzugsweise kann bei einer vierfachen Phasenumschaltung (Fig. 3) zumindest angenähert

$To = 3,9082$

$p = 0,8333$

$q = 0,5000$

und bei einer zweifachen Phasenumschaltung (Fig.2)

$To = 2,35$

$g = 0,708$

gewählt werden. Bei einem Expandersystem mit nachgeschalteter Begrenzerschaltung LMS kann nur der Teil des Spektrums Cs ausgenützt werden, der sich innerhalb des Vierecks A B C D (Fig. 4) befindet, da der restliche Teil durch die Begrenzung verloren geht. Im Gegensatz dazu ist der brauchbare Teil des Spektrums Ce nach der Erfindung durch das Viereck A B'C'D bestimmt, was einen Gewinn von mehr als 5 dB ergibt. Beim erfindungsgemässen Expandersystem entstehen allerdings zwei Frequenzzipfel im Bereich F = 0,6 bis 1 bzw. F = - 0,6 bis - 1 , die aber ohne weiteres ausgefiltert werden können.

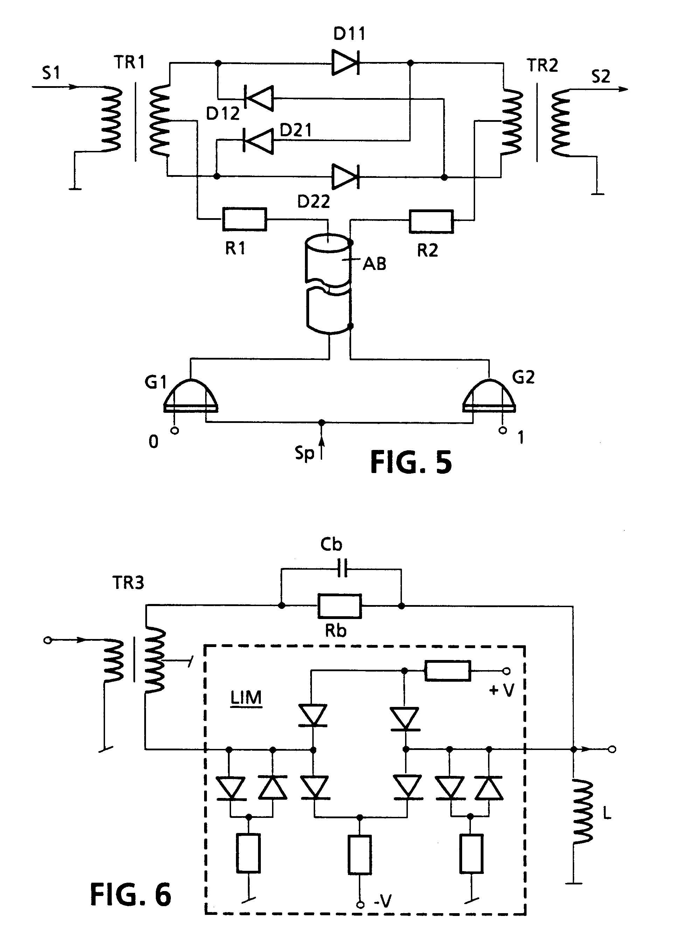

Der Modulator nach Fig. 5 weist zwei Ringtransformatoren, beispielsweise aus Ferrit, auf, deren Sekundärmittelanzapfung jeweils über einen Widerstand R1 bzw. R2 an den Ausgang je eines Exklusiv-ODER-Tores G1 bzw. G2 angeschlossen ist. Dabei ist jedes Ende der Sekundärwicklung des Transformators TR1 jeweils über eine Längsdiode D11 bzw. D22 und über eine Querdiode D12 bzw. D21 mit je einem Ende der Sekundärwicklung des Transformators TR2 derart verbunden, dass jede der beiden Querdioden D12 und D21 strommässig als in Serie mit der ihr zugeordneten Längsdiode D11 bzw. D22 geschaltet erscheint.

Der erste Eingang des Tores G1 wird mit einem Signal "0" und sein zweiter Eingang mit dem Signal Sp beaufschlagt, das auch dem ersten Eingang des Tores G2 zugeführt wird, dessen zweiter Eingang mit einem Signal "1" beaufschlagt ist. Gegebenenfalls kann eine relative lange Leitung zwischen den Ausgängen der Tore G1, G2 und den Widerständen R1, R2 vorgeschrieben sein. In einem solchen Fall kann der Draht, der den Ausgang des Tores G1 mit dem Widerstand R1 verbindet, mit einer leitenden Abschirmung AB geschützt sein, an die sowohl der Ausgang des Tores G2 als auch der Widerstand R2 angeschlossen ist.

Der Modulator PM nach Fig. 5 funktioniert in der Weise, dass, wenn das Signal Sp den Wert "0" aufweist, die Dioden D11 und D22 leiten und das der Primärwicklung des Transformators TR1 zugeführte Signal S1 als Signal S2 ohne Phasenverschiebung an der Sekundärwicklung des Transformators TR2 erscheint. Sobald aber das Signal Sp auf den Wert "1" kippt, beginnen die Dioden D12 und D21 zu leiten und gleichzeitig erfährt das Signal S2 eine Phasenverschiebung von 180°.

Die Begrenzerschaltung LMS nach Fig. 6 weist einen Begrenzer oder Limiter LIM beispielsweise vom handelsüblichen Typ WJ-LA 7 auf, dessen Ausgang einerseits über eine Spule L mit einem Bezugspotentialanschluss und andererseits über die Reihenschaltung eines Kondensators Cb und der Sekundärwicklung eines Transformators TR3 mit dem Eingang des Begrenzers verbunden ist. Eine mittlere Anzapfung dieser Sekundärwicklung ist an ein Bezugspotential angeschlossen. Das Nutzsignal wird der Primärwicklung des Transformators zugeführt. Der Kondensator Cb hat einen relativ kleinen Kapazitätswert und kann einen parallelgeschalteten Widerstand Rb aufweisen. Durch den Kondensator Cb und/oder den Widerstand Rb wird der Phasengang bzw. die Begrenzerkennlinie der Schaltung verbessert.

**Patentansprüche**

1. Expandersystem für Pulssignale mit einem Expander-Filter (DVA; DVB) und mindestens einem nachgeschalteten Verstärker (VA2; VB2, VC) **dadurch gekennzeichnet,** dass dem Expander-Filter ein 180° - Phasenmodulator (PM) vorgeschaltet ist, der während der Dauer Ti eines Pulssignals (Si) mindestens zwei Phasenverschiebungen von 180° bewirkt.

2. Expandersystem nach Anspruch 1, **dadurch gekennzeichnet,** dass zwei Phasenverschiebungen in Zeitpunkten t1 und t2 bewirkt werden, für die die Beziehung t1 + t2 = Ti gilt.

3. Expandersystem nach Anspruch 2, **dadurch gekennzeichnet,** dass für die Zeitpunkte t1 und t2 die Bedingungen

$$(t2 - t1)/Ti = 0,71 \pm 0,1$$
$$B \bullet Ti = 2,35 \pm 0,1$$

gelten.

4. Expandersystem nach Anspruch 1, **dadurch gekennzeichnet,** dass vier Phasenverschiebungen in Zeitpunkten t1, t2, t3, t4 bewirkt werden, die die Beziehungen

$$t1 + t4 = t2 + t3 = Ti$$

erfüllen.

5. Expandersystem nach Anspruch 4, **dadurch gekennzeichnet,** dass die Zeitpunkte t1, t2, t3, t4 die Bedingungen

$$(t4 - t1)/Ti = 0,83 \pm 0,1$$
$$(t3 - t2)/Ti = 0,50 \pm 0,1$$
$$B \bullet Ti = 3,91 \pm 0,1$$

erfüllen.

6. Expandersystem nach einem der Ansprüche 1 bis 5, **dadurch gekennzeichnet,** dass der Phasenmodulator (PM) zwei Ringtransformatoren (TR1, TR2) aufweist, deren Sekundärmittelanzapfung jeweils über einen Widerstand (R1 bzw. R2) an den Ausgang je eines Tores (G1 bzw. G2) angeschlossen ist, und dass jedes Ende der Sekundärwicklung des ersten Transformators (TR1) jeweils über eine Längsdiode (D11 bzw. D22) und über eine Querdiode (D12 bzw. D21) mit je einem Ende der Sekundärwicklung des zweiten Transformators (TR2) derart verbunden ist, dass jede der beiden Querdioden (D12 und D21) strommässig als in Serie mit der ihr zugeordneten Längsdiode (D11 bzw. D22) geschaltet erscheint.

7. Expandersystem nach einem der Ansprüche 1 bis 6, **dadurch gekennzeichnet,** dass eine Begrenzerschaltung (LMS) nachgeschaltet ist, die einen Begrenzer (LIM) aufweist, dessen Ausgang über die Reihenschaltung eines Kondensators (Cb) und der Sekundärwicklung eines Transformators (TR3) mit dem Eingang des Begrenzers verbunden ist, dass eine mittlere Anzapfung dieser Sekundärwicklung an ein Bezugspotential angeschlossen ist, und dass die Primärwicklung dieses Transformators (TR3) mit dem Nutzsignal beaufschlagt wird.

# Claims

1. Expander system for pulse signals having an expander filter (DVA; DVB) and at least one subsequently connected amplifier (VA2; VB2, VC), characterised in that a 180°-phase modulator (PM) is connected before the expander filter and in the course of the duration Ti of a pulse signal (Si) effects at least two phase shifts of 180°.

2. Expander system according to claim 1, characterised in that two phase shifts are effected at instants t1 and t2, for which the relationship t1 + t2 = Ti holds good.

3. Expander system according to claim 2, characterised in that for the instants t1 and t2 the conditions

$$(t2 - t1)/Ti = 0.71 \pm 0.1$$
$$B \bullet Ti = 2.35 \pm 0.1$$

hold good.

4. Expander system according to claim 1, characterised in that four phase shifts are effected at instants t1, t2, t3, t4 which comply with the relationships

$$t1 + t4 = t2 + t3 = Ti.$$

5. Expander system according to claim 4, characterised in that the instants t1, t2, t3, t4 fulfil the conditions

$$(t4 - t1)/Ti = 0.83 \pm 0.1$$
$$(t3 - t2)/Ti = 0.50 \pm 0.1$$
$$B \bullet Ti = 3.91 \pm 0.1.$$

6. Expander system according to one of the claims 1 to 5, characterised in that the phase modulator (PM) has two ring transformers (TR1, TR2), the secondary centre tap of which is connected, in each case, by way of a resistor (R1 and R2 respectively) to the output of a respective gate (G1 and G2), and in that each end of the secondary winding of the first transformer (TR1) is connected, in each case, by way of a longitudinal diode (D11 and D22) and by way of a transverse diode (D12 and D21) to a respective end of the secondary winding of the second transformer (TR2) in such a way that each of the two transverse diodes (D12 and D21) in terms of current appears to be connected in series with the longitudinal diode (D11 and D22 respectively) associated with it.

7. Expander system according to one of the claims 1 to 6, characterised in that a limiter circuit arrangement (LMS) is subsequently connected, having a limiter (LIM) the output of which is connected by way of the series circuit arrangement of a capacitor (Cb) and the secondary winding of a transformer (TR3) to the input of the limiter, in that a centre tap of this secondary winding is connected to a reference potential and in that the useful signal is applied to the primary winding of this transformer (TR3).

**Revendications**

1. Système expanseur pour des signaux impulsionnels, comportant un filtre expanseur (DVA;DVB) et au moins un amplificateur (VA2;VB2,VC) branché en aval, caractérisé par le fait qu'en amont du filtre expanseur est branché un modulateur de phase à 180° (PM), qui, pendant la durée (Ti) d'un signal impulsionnel (Si), exécute au moins deux déphasages de 180°.

2. Système expanseur suivant la revendication 1, caractérisé par le fait que deux déphasages sont exécutés à l'instant t1 et t2, pour lesquels on a la relation t1 + t2 = Ti.

3. Système expanseur suivant la revendication 2, caractérisé par le fait que pour les instants t1 et t2, on a les conditions

(t2 - t1)/Ti = 0,71 ± 0,1
B.Ti = 2,35 ± 0,1

4. Système expanseur suivant la revendication 1, caractérisé par le fait que quatre déphasages sont produits aux instants t1, t2, t3, t4, qui satisfont à la relation

t1 + t4 = t2 + t3 = Ti

5. Système expanseur suivant la revendication 4, caractérisé par le fait que les instants t1, t2, t3, t4 satisfont aux conditions

(t4 - t1)/Ti = 0,83 ± 0,1

(t3 - t2)/Ti = 0,50 ± 0,1
B.Ti = 3,91 ± 0,1

6. Système expanseur suivant l'une des revendications 1 à 5, caractérisé par le fait que le modulateur de phase (PM) comporte deux transformateurs en anneau (TR1, TR2), dont la prise médiane du secondaire est raccordée respectivement par l'intermédiaire d'une résistance (R1 ou R2), à la sortie d'ube porte (G1 ou G2), et que chaque extrémité de l'enroulement secondaire du premier transformateur (T1) est raccordée respectivement, par l'intermédiaire d'une diode longitudinale (D11 ou D22) et par l'intermédiaire d'une diode transversale (D12 ou D21), à une extrémité respective de l'enroulement secondaire du second transformateur (TR2) de sorte que chacune desdites diodes transversales (D12 et D21) apparaît, du point de vue du courant, comme étant branchée en série avec la diode longitudinale (D11 ou D22) qui lui est associée.

7. Système expanseur suivant la revendication 1 à 6, caractérisé par le fait qu'en aval est branché un circuit limiteur (LMS), qui possède un limiteur (LIM), dont la sortie est raccordée, par l'intermédiaire du circuit série formé d'un condensateur (Cb) et de l'enroulement secondaire d'un transformateur (TR3), à l'entrée du limiteur, qu'une prise médiane de cet enroulement secondaire est raccordée à un potentiel de référence et que l'enroulement primaire de ce transformateur (TR3) est chargé par le signal utile.

**FIG. 1**

FIG. 2

FIG. 3

FIG. 4

FIG. 5

FIG. 6